# EUROPEAN PATENT APPLICATION

(11) **EP 0 616 140 A2**
(43) Date of publication of application: **21.09.1994**
(21) Application number: 93120973.8
(22) Date of filing: 27.12.1993
(51) Int. Cl.: F16D 1/08

(54) **Structure for mounting mechanical element to shaft**

(30) Priority: 28.12.1992 JP 349145/92
(71) Applicant: MITA INDUSTRIAL CO. LTD., Osaka-shi Osaka-fu 540 (JP)
(72) Inventor: Fujisawa, Shuji, c/o MITA INDUSTRIAL CO., LTD., Osaka-shi, Osaka 540 (JP); Okuda, Takeshi, c/o MITA INDUSTRIAL CO., LTD., Osaka-shi, Osaka 540 (JP); Sakato, Ryouhei, c/o MITA INDUSTRIAL CO., LTD., Osaka-shi, Osaka 540 (JP)
(74) Representative: Popp, Eugen, Dr.

(57) **Abstract**

A mechanical element (e.g. a gear (G)) made of synthetic resin has an integrally formed axially extending elastic lock member (21) with at its tip a claw (22) for engaging a groove (3) in a shaft (S) to mount the mechanical element on the shaft.

## Description

### BACKGROUND OF THE INVENTION

### Field of the Invention

The present invention relates to a structure for mounting mechanical element to shaft, more particularly to a structure for mounting mechanical element to shaft which may prevent the mechanical element mounted to the shaft such as a gear, a cam, a roller or the like from falling off from the shaft.

Conventionally, a C-shaped metal snap ring is used for preventing the mechanical element mounted to the shaft from falling off from the shaft.

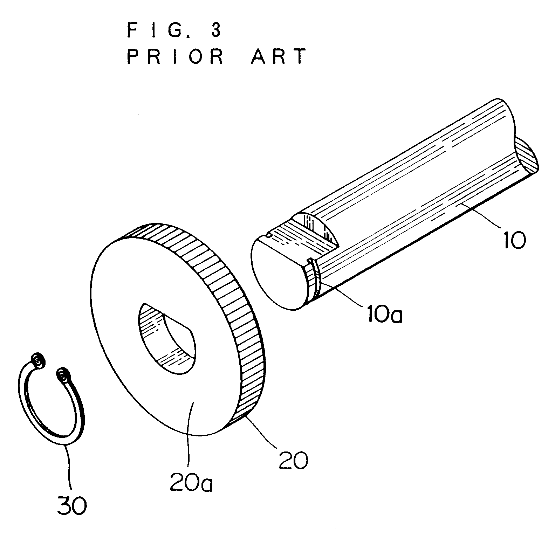

Fig. 3 is an exploded perspective view illustrating a known example using the snap ring. A gear 20 being the mechanical element is fit to a shaft 10, and is prevented from falling off from the shaft 10 by a snap ring 30 fit to a peripheral groove 10a in the shaft 10.

Said metal snap ring 30 has, however, a high rigidity so that in order to fit this with the peripheral groove 10a of the shaft 10, it is necessary to expand the snap ring 30 using a special tool. Therefore, an operation for fitting the snap ring 30 into the peripheral groove 10a in the shaft 10 requires much labor. This lowers operation efficiency in mounting the gear to the shaft, thus increasing the manufacturing cost.

In addition, movement of the gear 20 in only one direction can be prevented by one snap ring 30. Whereas if the gear 20 needs to be secured in a predetermined position, it becomes necessary to mount two snap rings 30 to the shaft 10 so as to sandwich the gear 20 between these two snap rings 30. This calls for much more labor for fitting the snap rings 30 into the peripheral groove 10a in the shaft 10, thus increasing further manufacturing cost.

An object of the present invention is to provide a structure for mounting the mechanical element to the shaft which realizes an easy and less costly operation for mounting the mechanical element such as a gear and others to the shaft.

Another object of the invention is to provide a structure for mounting the mechanical element to the shaft which can secure the mechanical element mounted to the shaft in a predetermined position easily and less costly.

### SUMMARY OF THE INVENTION

The above objects may be achieved by the following structure for mounting mechanical element to shaft comprising:
a mechanical element made of synthetic resin fit to the shaft; and
a lock member for preventing the mechanical element from falling off from the shaft, the lock member including:
an elastic piece integrally formed with the mechanical element, extending axially from an end surface of the mechanical element, and elastically being deformable away from the shaft in the direction of the diameter of the shaft; and
a claw formed on a tip side of the elastic piece and engaged with a groove formed in the shaft.

In the foregoing structure for mounting the mechanical element to the shaft, engagement of the groove formed in the shaft and the claw of the lock member can prevent the mechanical element fit to the shaft from falling off from the shaft. Furthermore, the mechanical element can be mounted to the shaft merely by inserting the shaft into the mechanical element while preventing the end surface of the shaft from contacting with the claw of the lock member by elastically deforming the elastic piece of the lock member away from the shaft. Thus the mechanical element can efficiently be mounted to the shaft.

It is preferable that the claw of the lock member may have a guide surface which elastically deforms the elastic piece away from the shaft by coming in contact with the end portion of the shaft so that a tip of the claw is led to the outer periphery of the shaft. In this embodiment, when the shaft is inserted in the mechanical element, the end portion of the shaft comes in contact with the guide surface of the claw of the lock member. If the shaft is inserted further in the mechanical element in this state, the elastic piece is elastically deformed away from the shaft and a tip of the claw may be guided to the outer periphery of the shaft. This does not call for a manual operation to elastically deform the elastic piece of the lock member away from the shaft.

The lock member may have a finger hook for hooking a finger when elastically deforming the elastic piece, at the tip portion of the elastic piece. In this embodiment, hooking a finger on the finger hook makes it easy to deform the elastic piece away from the shaft. This facilitates the operations for inserting the shaft into the mechanical element or drawing the shaft out of the mechanical element.

Preferably, the claw of the lock member may have a first engagement surface coming in contact with the groove in the shaft to prevent the mechanical element from falling off from the shaft, and a second engagement surface coming in contact with the groove in the shaft to prevent the mechanical element from moving in the opposite direction of the mechanical element falling off from the shaft. In this embodiment, the mechanical element mounted to the shaft may always be secured in a predetermined position.

It is preferable that the foregoing structure for mounting the mechanical element to the shaft may have a plurality of the lock members. This embodiment can assuredly prevent the mechanical element from falling off from the shaft.

It is preferable that the claw of the lock member may be integrally formed with the mechanical element and the elastic piece. In this embodiment, it is possible to form the claw at the same time that the mechanical element and elastic piece are formed. Thus the claw can be formed readily.

### BRIEF DESCRIPTION OF THE DRAWINGS

Fig. 1 is a partially broken exploded perspective view showing an embodiment of the structure for mounting the mechanical element to the shaft in accordance with the invention.

Fig. 2 is an essential sectional view showing a state that the lock member and the groove for engagement are engaged each other.

Fig. 3 is an exploded perspective view showing a conventional example.

### DETAILED DESCRIPTION OF THE PREFERRED EMBODIMENT

Referring to accompanying drawings showing a preferable embodiment of the invention, the present invention will be described in details.

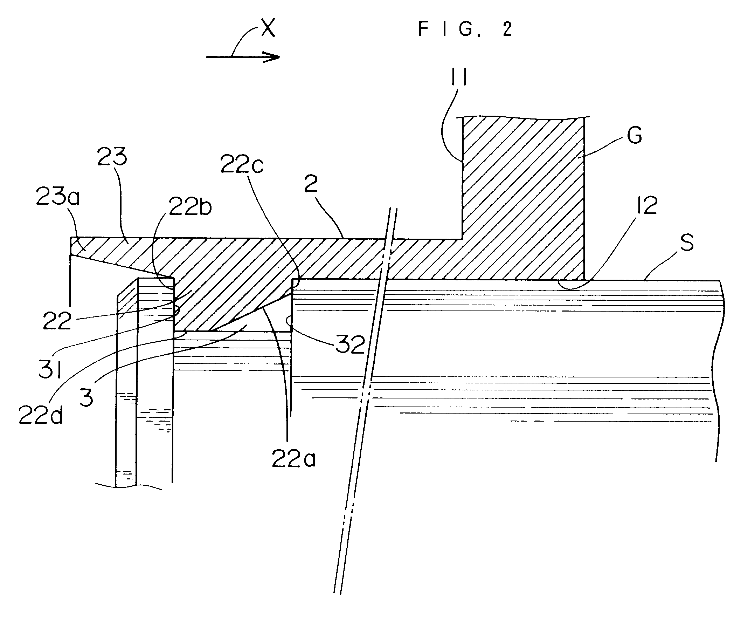

In the structure for mounting mechanical element to shaft in accordance with the invention, a lock member 2 integrally formed with a gear G as the mechanical element engages with a groove 3 in a shaft S to which the gear G is mounted (see Fig. 2).

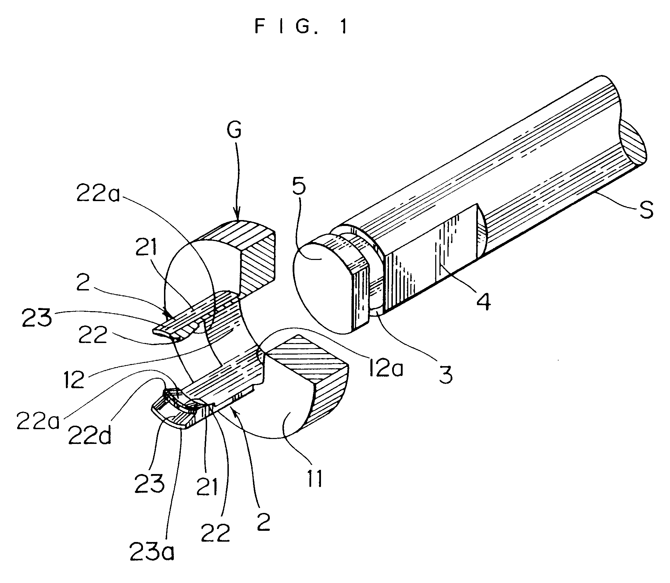

The gear G is made of synthetic resin. At the center of the gear G, a hole 12 for inserting the shaft S is formed. The hole 12 is substantially D-shaped in section having a flat side 12a in the inner periphery (see Fig. 1).

On an end surface 11 of the gear G, a pair of lock members 2 are protruded with both opposed to each other. The lock members 2 is made of synthetic resin, integrally formed with the gear G. Each of the lock members 2 has an elastic piece 21 extending axially, a claw 22 engaging with the groove 3 in the shaft S and a finger hook 23 used when elastically deforming the elastic piece 21 away from the shaft S in the direction of the diameter of the shaft S.

The inner side of the elastic piece 21 is curved so that it may be flush with the inner surface of the hole 12, in other words, may come in close contact with the outer periphery of the shaft S. The elastic piece 21 is of sufficient strength for allowing the elastic piece 21 to be elastically deformed away from the shaft S by hooking a finger on the finger hook 23.

The claw 22 has a first engagement surface 22b orthogonal to the shaft S. The first engagement surface 22b comes in contact with a side wall 31 of the groove 3 in the shaft S, thereby preventing the gear G from falling off from the shaft S. A space between a tip 22d of the claw 22 of one lock member 2 and a tip 22d of the claw 22 of the other lock member 2 is set smaller than the diameter of the shaft S in a state leaving the elastic piece 21 free so as to allow each of the claws 22 to enter the groove 3 in the shaft S. The claw 22 may be shaped substantially triangle in section.

On the opposite side of the first engagement surface 22b of the claw 22, there is provided a guide surface 22a that comes in contact with the end of the shaft S when fitting the gear G to the shaft S, and elastically deforms the elastic piece 21 away from the shaft S. The guide surface 22a is a slant increasing in the thickness toward the engagement surface 22b.

The claw 22 has a second engagement surface 22c formed continuously with the guide surface 22a, in parallel with the first engagement surface 22b. The second engagement surface 22c is in contact with the other side wall 32 of the groove 3 in the shaft S, thereby preventing the gear G from moving in the opposite direction of the gear G falling off from the shaft S (in the direction shown by an arrow X in Fig. 2).

The finger hook 23 is integrally formed with the elastic piece 21. The finger hook 23 extends axially from the tip of the elastic piece 21, and the tip portion 23a thereof protrudes from an end portion 5 of the shaft S.

A plane 4 is formed on the outer periphery of the shaft S. By making the plane 4 coincide with the flat side 12a of the hole 12 of the gear G, relative rotation of the shaft S and gear G is restricted. On the outer periphery of the shaft S, the groove 3 is formed at a predetermined distance away from the end portion 5 in the shaft S. The groove 3 is provided in the circumferential direction of the shaft S. The claw 22 of the lock member 2 extends along the groove 3 in the circumferential direction of the shaft S.

To mount the gear G to the shaft S, first insert the shaft S in a hole 12 of the gear G. Then the guide surface 22a of the claw 22 of the lock member 2 comes in contact with the end portion 5 of the shaft S. If the shaft S is inserted further in the gear G in this state, the shaft S will push the guide surface 22a of the claw 22 to elastically deform a pair of the lock members 2 away form the shaft S in the direction of the diameter of the shaft S. Consequently, the tip of the claw 22 of the lock member 2 will run onto the outer periphery of the shaft S. If the shaft S is further guided into the gear G in this state, the claw 22 will enter the groove 3 engaging with the groove 3 at a point of time where the groove 3 in the shaft S coincides with the claw 22 of the lock member 2. In this manner the gear G may always be secured in a predetermined position.

To remove the gear G mounted to the shaft S from the shaft S, hook a finger on the finger hook 23 at the tip of the lock member 2 and elastically deform the elastic piece 21 away from the outer periphery of the shaft S in the direction of the diameter of the shaft S. This will disengage the claw 22 engaged with the groove 3 from the groove 3, thus permitting the gear G to be drawn out from the shaft S.

In the above embodiment, mere insertion of the shaft S into the gear G may enable it to mount the gear G to the shaft S while preventing the gear G from falling off from the shaft S. Accordingly, the gear G may be mounted to the shaft S in an efficient manner. Furthermore, both the first and second engagement surfaces 22b, 22c of the lock member 2 are in contact with the groove 3, thus always securing the gear G mounted to the shaft S in a predetermined position.

In removing the gear G from the shaft S, the claw 22 may be disengaged from the groove 3 merely by elastically deforming the elastic piece 21 with a finger hooked on the finger hook 23 of the lock member 2. Thus the gear G may be readily removed from the shaft S.

As compared with a conventional example using a snap ring, the number of steps for mounting the gear G to the shaft or removing the gear G mounted to the shaft S from the shaft S may become smaller. As a result, the manufacturing cost as well as the maintenance cost may be reduced.

From that the number of parts may be reduced by omitting the conventional snap and that the gear G and lock member 2 are integrally made of synthetic resin, the manufacturing cost thereof may become lower, reducing the manufacturing cost still more.

In the above embodiment, a pair of lock members 2 are provided, so that the gear G may be assuredly prevented from falling off from the shaft S. The number of the look member 2 may be only one, or may be 3 or more.

The claw 22 of the lock member 2 may not have the guide surface 22a. In such an example, the shaft S may be inserted into the gear G after elastically deforming the elastic piece 21 away from the shaft S with a finger hooked on the finger hook 23.

Relative rotation of the gear G and shaft S may be prevented by a bolt or a key.

This invention may also apply to the other mechanical elements than the foregoing gear, for example, a cam, a roller, a bearing or the like.

## Claims

1. A structure for mounting mechanical element to shaft comprising:
a mechanical element made of synthetic resin which is fit to a shaft; and
a lock member for preventing said mechanical element from falling off from the shaft, said lock member including:
an elastic piece integrally formed with said mechanical element, extending axially from an end surface of said mechanical element, and elastically being deformable away from the shaft in the direction of the diameter of the shaft; and
a claw formed at a tip of said elastic piece and being engaged with a groove formed in the shaft.

2. A structure for mounting mechanical element to shaft as set forth in claim 1, wherein said claw of the lock member has a guide surface adapted to contact with an end portion of the shaft when fitting said mechanical element to the shaft so as to elastically deform said elastic piece away from the shaft, thereby guiding a tip of said claw to the outer periphery of the shaft.

3. A structure for mounting mechanical element to shaft as set forth in claim 1, wherein a finger hook for hooking a finger when elastically deforming said elastic piece is provided at a tip portion of said elastic piece.

4. A structure for mounting mechanical element to shaft as set forth in claim 1, wherein said claw of the lock member has a first engagement surface coming in contact with the groove in the shaft to prevent the mechanical element from falling off from the shaft, and a second engagement surface coming in contact with the groove in the shaft to prevent said mechanical element from moving in the opposite direction of said mechanical element falling off from the shaft.

5. A structure for mounting mechanical element to shaft as set forth in claim 1, wherein said structure has a plurality of the lock members.

6. A structure for mounting mechanical element to shaft as set forth in claim 1, wherein said claw is integrally formed with the mechanical element and the elastic piece.
